# EUROPEAN PATENT SPECIFICATION

(11) **EP 1 755 387 B1**
(45) Date of publication and mention of the grant of the patent: **28.11.2012**
(21) Application number: 05744426.7
(22) Date of filing: 18.05.2005
(51) Int. Cl.: A01N 25/34, A01N 59/00, B32B 33/00

(54) **AN ANTIMICROBIAL CONSTRUCTION**
ANTIMIKROBIELLE KONSTRUKTION
CONSTRUCTION ANTIMICROBIENNE

(30) Priority: 21.05.2004 GB 0411304
(43) Date of publication of application: 28.02.2007
(73) Proprietor: Gama Healthcare Ltd., London NW4 3RJ (GB)
(72) Inventor: Fellows, Adrain Neville, Hebden Bridge HX7 7DY (GB)
(74) Representative: Bray, Lilian Janet
(86) International application number: PCT/GB2005/001878
(87) International publication number: WO 2005/112631

(56) References cited:
- EP-A- 0 864 641
- WO-A-94/19028
- WO-A-94/26317
- WO-A-96/31119
- WO-A-98/22554
- WO-A-02/058748
- WO-A-03/057262
- GB-A- 2 355 198
- US-B1- 6 210 639
- DATABASE CHEMABS [Online] CHEMICAL ABSTRACTS SERVICE, COLUMBUS, OHIO, US; J.H.KOEK ET AL.: "Synthesis and properties of hydrophobic [MnIV2(.mu.-O)3(L)2]2+ complexes, derived from alkyl substituted 1,4,7-triazacyclononane ligands" XP002360620 retrieved from STN-INTERNATIONAL Database accession no. 132:160309 & INORGANICA CHIMICA ACTA, vol. 295, no. 2, 1999, pages 189-199,
- DATABASE CHEMABS [Online] CHEMICAL ABSTRACTS SERVICE, COLUMBUS, OHIO, US; XP002360621 retrieved from STN-INTERNATIONAL Database accession no. 130:97201 & JP 10 324895 A (LION) 8 December 1998 (1998-12-08)
- DATABASE CHEMABS [Online] CHEMICAL ABSTRACTS SERVICE, COLUMBUS, OHIO, US; XP002360622 retrieved from STN-INTERNATIONAL Database accession no. 130:254118 & JP 11 061191 A (LION) 5 March 1999 (1999-03-05)

## Description

The present invention relates to a construction comprising a substrate incorporating an activatable antimicrobial composition for use, for example, as a pad, a wipe, or as a means of dosing the composition.

The term "substrate" used herein and in the claims is intended to include cloth, paper and other nonwoven materials as well as woven or knitted textile fabrics. In addition, the term "substrate" is intended to cover naturally occurring materials such as animal skins.

Antimicrobial compositions must exhibit a range of properties to be useful. Many of these properties are as follows.
1. The composition should act rapidly - European standards require a contact time of five minutes.
2. The composition should be biocidal and not merely biostatic.
3. The composition should have a wide spectrum of activity against bacteria, including all Gram-positive and Gram-negative bacteria, as well as mycobacteria.
4. The composition should be active against all types of fungi.
5. The composition should be virucidal, against both enveloped and non-enveloped viruses.
6. The composition should be effective in both clean and dirty conditions and be able to penetrate biofilms.
7. The composition should be rapidly effective against bacterial endospores.
8. The mechanism of activity of the composition should not give rise to resistance.
9. The composition should be of low toxicity to non-target life forms.
10. The composition should be adequately stable to allow ease of use and storage.
11. The composition should be simple to use.
12. The effect and residue chemistry of the composition should be environmentally benign.
13. The composition should remain rapidly effective down to low temperatures of around 4°C or lower.
14. The composition should embody an indicator of its performance.
15. The composition should be cost effective in use.

To produce an antimicrobial composition with all of these properties is extremely difficult as such products, by their nature, are toxic and reactive. Many are comprised of complex organic molecules, the residues of which resist environmental breakdown or may bio-accumulate. Others react with organic matter and may be knocked out in the presence of high soil levels or may react with organic soil to produce toxic or carcinogenic compounds. Many are unstable or of limited spectrum.

It is an object of the present invention to provide a construction comprising a substrate incorporating with an activatable antimicrobial composition which exhibits most and, in specific formulations, all of the aforementioned properties. Such a substrate must retain the antimicrobial composition in a stable manner ready for use, at which time the composition can be activated, for example by wetting the substrate with water or other appropriate liquid.

WO94/26317 describes a film including a porous layer wherein activatable reagents are separated by one of
(a) separate encapsulation,
(b) a filter material having pores smaller than the physical size of particles of the reagent,
(c) a porous layer on opposite side of which the reagents are separately disposed, and
(d) impregnation of the dry reagents displaced from each other in a common flexible layer.

US6,210,639 discloses a dosage tablet wherein a particles of a peroxide or peroxide-generating species and of an activator are retained in a dissolvable tablet.

WO02/058748 discloses an absorbent pad comprising an absorbent layer attached, for example by needle punching or adhesive, to one or more disinfecting layers that contain a mixture of reactant chemicals. These chemicals may be distributed in one or more disinfecting layers or may be mixed in a single layer. The disinfecting layers may be air-laid on top of one another and are preferably needle-punched together.

According to the present invention there is provided a construction comprising a substrate constructed as a laminate and incorporating an activatable antimicrobial composition that includes a peroxygen donor and an acid or an acid-producing substance, the peroxygen donor being separated from the other component, or components of the composition until activation by wetting;
characterised in that
the layers of the laminate are binded together by a binding medium which is applied as a powder, net or sheet; and in that
the peroxygen donor is separated from the other component or components of the composition by incorporation in the substrate either between different layers of the laminate from the other component or components of the composition or by application in a different zone or area of the substrate from the other component or components of the composition in different parts of a scatter pattern.

In such a construction, the peroxygen donor is incorporated separately and in a different portion of the substrate from the other components of the composition in order that the antimicrobial composition is only formed and activated once the substrate is wetted, preferably with water.

The substrate is constructed as a laminate, such as a nonwoven laminate, comprising layers bonded together by a bonding medium which may be applied as a powder, net or sheet, the peroxygen donor being incorporated in the substrate in between different layers from the other components, or otherwise separated by application in a different zone or area of the substrate, for instance in parallel scatterings or in different parts of a scatter pattern.

Preferably also, the substrate comprises a nonwoven material made from cellulosic fibres, for example cotton, viscose, regenerated wood pulp cellulose or similar material. Alternatively or in addition, the material comprises fibres including at least one of polyester, polyamide, polyethylene, and polypropylene fibres. Where the fibres of the nonwoven have physical properties, for example bi-component fibres, which allow the substrate to be thermally or physically bonded or entangled in a discreet layer or web, it may be possible to dispense with all or most of the bonding medium.

Preferably also, the substrate is impregnated with an oxygen-sensitive dye, such as a vat dye, which acts to indicate activity of the antimicrobial composition.

Preferably also, the acid comprises a carboxylic acid.

In some embodiments, the antimicrobial composition additionally incorporates an organometallic manganese containing catalyst, for example a manganese-trimethyltriazacyclononane complex.

Preferably also, the acid may comprise a bidentate acid and preferably oxalic acid. Such acids can influence the nuclearity and redox potential of the metal centres in the catalyst which, in turn, improves the spectrum and speed of biocidal activity. Alternatively, however, other acids such as fumaric, ascorbic, succinic, glutaric and mixtures thereof may also be used. In addition, combinations of acid and salts of the acid may also be used, for instance, oxalic acid and sodium oxalate. A combination of oxalic acid and pH buffers such as sodium phosphate may also be used.

Combinations of acids may also be used, for example a combination of oxalic acid and citric acid. Also, reaction between the peroxygen donor and a bleach activator, such as tetra acetyl ethylene diamine (TAED) would beneficially produce peracetic acid. Such a reaction will occur on activation of the composition. Hence, advantageously, the acid of the composition may be a separate component of the composition or may be generated *in situ* in the substrate on activation.

The peroxygen donor may be chosen from any of those compounds exhibiting strong redox potential by generation of hydrogen peroxide or other mechanism. Preferably, therefore, the peroxygen donor comprises any of sodium perborate as mono or tetra hydrate, sodium percarbonate, and sodium persulphate. It is also possible to generate an effective composition *in situ* by activating the substrate using a hydrogen peroxide solution.

In order to most completely meet the above list of desirable properties, rapidly at low temperatures, in particular at temperatures below 4°C, the substrate is preferably additionally incorporates the aforesaid organometallic manganese containing catalyst. Advantageously, the organometallic manganese containing catalyst comprises a manganese-trimethyltriazacyclononane complex, such as that known commercially as catalyst NP 1033, CAS No 116633-52-4. This is a manganese compound of the ligand 1,4,7-trimethyl-1,4,7-triazacyclononane. However, other manganese catalysts with related ligand structures and other biomimetic manganese containing catalysts may also be used.

The catalyst to peroxygen donor ratio may be as high as 1:100000, however, preferably, the preferred ratio is between 1:100 and 1:3000 inclusive.

Likewise, the catalyst to acid ratio, preferably when using bidentate carboxylic acid, can be in the range 1: 1 to 1: 100 but preferably the preferred ratio is between 1: 3 and 1:50 inclusive.

Other components may usefully be added to the composition according to the invention. These may comprise one or more of anionic or nonionic surfactants such as sodium lauryl sulphate or linear alcohol ethoxylates; corrosion inhibitors, pH buffers, chelating agents or sequestrants, stabilizers, dyes, fragrances and odour masking agents.

Two examples of formulations of antimicrobial compositions in accordance with the invention will now be described.

### Example 1

| | |
|---|---|
| Sodium perborate tetrahydrate | 1.05 parts |
| Tetra acetyl ethylene diamine | 0.014 parts |
| Oxalic acid | 0.35 parts |
| NP 1033 | 0.01 parts |

### Example 2

| | |
|---|---|
| Sodium percarbonate | 50 parts |
| Tetra acetyl ethylene diamine | 25 parts |
| Sequestrant | 2 parts |
| Anionic surfactant | 5 parts |
| Citric acid | 1 part |

The antimicrobial performance of each these formulations can be demonstrated by adding 1 part formulation to 10 parts of water. The ensuing solutions both meet the requirements of the European suspension test EN1276:1997. This test is a quantitative suspension test for the evaluation of bactericidal activity of chemical disinfectants and antiseptics used in foods, industrial, domestic and institutional areas. To meet the test a greater than log 5 kill of all test organisms must occur within a 5 minute contact time and at temperatures of both 20° C and 4° C in both clean and dirty conditions. The test organisms used are *Pseudomonas aeruginosa, Escherichia coli, Staphylococcus aureus* and *Enterococcus hirae.*

Both of the formulations also show excellent sporicidal, fungicidal and virucidal properties in standard tests. In addition, it should be noted that the residue products of Example 1 are environmentally benign. It is known that in formulations containing peroxygen donors and bleach activators such as TAED that a very wide range of ratios of the two components can be used determined by requirements such as the concentration of peracetic acid generated, the rate of generation, the pH of the system, the stability, solubility and other factors. Hence in constructions in accordance with this invention a wide range of ratios of the antimicrobial composition and quantitative loadings of the substrate is possible.

An additional formulation of antimicrobial composition in accordance with the invention will now be described.

### Example 3

| | |
|---|---|
| Sodium perborate tetrahydrate | 1.05 parts |
| Oxalic acid | 0.35 parts |
| NP 1033 | 0.01 parts |

This formulation excludes the bleach accelerator. It also passes the European suspension test EN1276:1997 for all test organisms at a temperature of 20°C but not at a temperature of 4°C. Hence although useful, it may have more limited applications than other formulations of the composition.

A change in the oxidation state of the manganese catalyst where used in these formulations is also accompanied by a colour change. These formulations therefore embody an indicator of their performance.

The components of the antimicrobial composition are preferably produced in the form of powders or granules for ease of incorporation into separate portions of the body of the substrate, as described above, in order that the construction can remain in a stable condition ready for use. At this time, the antimicrobial composition can be activated by wetting the substrate with water. Such wetting may occur when a wipe construction according to the invention is wetted or is used to wipe a wet or damp surface; or is used to absorb a spillage containing an aqueous component; or is used as a filter for water which may be contaminated; or is moistened by water vapour, perspiration or other means.

Three embodiments of construction in accordance with the present invention are as follows.

### Embodiment 1

The substrate comprises a nonwoven laminate construction comprising two layers of hydroentangled nonwoven containing viscose and polyester fibres separated by a thermoplastic bonding medium in sheet form. The layer between the bottom nonwoven and the bonding medium contains the peroxygen donor. The layer between the bonding medium and the top nonwoven contains the tetra acetyl ethylene diamine, surfactant, acid and other components of the antimicrobial composition. The chemical components of the formulation being present at quantitative levels and in such ratios and at such a pH as to generate levels of peracetic acid when the substrate is wetted, which levels of peracetic acid are appropriate to the biocidal task required.

### Embodiment 2

The substrate comprises a nonwoven laminate construction as described above in Embodiment 1 but wherein the bonding medium is a low melting point thermoplastic powder and the peroxygen donor component of the formulation is separated from the other components by virtue of being applied by scattering or other means which ensure the peroxygen donor powder is restricted to areas of the substrate not covered by other components with which it might react.

### Embodiment 3

The substrate comprises a nonwoven laminate construction made up of highly absorbent airlaid fibres as one of the nonwoven layers, in which the peroxygen donor is sodium perborate monohydrate present at 15 g per square metre. The other components of the antimicrobial composition, which include TAED present at 8.0 g per square metre, are separated by virtue of two discreet patterns of powder scattering in combination with a thermoplastic powder bonding adhesive. The complete construction, on wetting, is capable of generating 500ppm of peracetic acid in one litre of water.

## Claims

1. A construction comprising a substrate constructed as a laminate and incorporating an activatable antimicrobial composition that includes a peroxygen donor and an acid or an acid-producing substance, the peroxygen donor being separated from the other component or components of the composition until activation by wetting; **characterised in that**
the layers of the laminate are bonded together by a bonding medium which is applied as a powder, net or sheet; and **in that**
the peroxygen donor is separated from the other component or components of the composition by incorporation in the substrate either between different layers of the laminate from the other component or components of the composition or by application in a different zone or area of the substrate from the other component or components of the composition in different parts of a scatter pattern.

2. A construction as claimed in Claim 1, **characterised in that** the substrate comprises a nonwoven material made from at least one of cellulosic fibres, polyester fibres, polyamide fibres, polyethylene fibres, and polypropylene fibres.

3. A construction as claimed in Claim 1 or Claim 2, **characterised in that** the substrate is impregnated with an oxygen-sensitive dye that which acts to indicate activity of the antimicrobial composition.

4. A construction as claimed in any of Claims 1 to 3, **characterised in that** the acid comprises a carboxylic acid.

5. A construction as claimed in any of Claims 1 to 4, **characterised in that** the acid comprises at least one of a bidentate acid, oxalic acid, fumaric acid, ascorbic acid, succinic acid, glutaric acid and any mixture of the aforesaid acids.

6. A construction as claimed in any of Claims 1 to 5, **characterised in that** the acid comprises a mixture of an acid and a salt.

7. A construction as claimed in any of Claims 1 to 6, **characterised in that** the acid-producing substance comprises a bleach activator.

8. A construction as claimed in Claim 7, **characterised in that** the bleach activator comprises tetra acetyl ethylene diamine.

9. A construction as claimed in any of Claims 1 to 8, **characterised in that** the peroxygen donor comprises at least one of sodium perborate as mono or tetra hydrate, sodium percarbonate, and sodium persulphate.

10. A construction as claimed in any of Claims 1 to 9, **characterised in that** the antimicrobial composition additionally comprises an organometallic manganese containing catalyst.

11. A construction as claimed in Claim 10, **characterised in that** the organometallic manganese containing catalyst comprises a manganese-trimethyltriazacyclononane complex.

12. A construction as claimed in Claim 10 or Claim 11, **characterised in that** the catalyst to peroxygen donor ratio is in the range between 1:100 and 1:3000 inclusive.

13. A construction as claimed in any of Claims 10 to 12, **characterised in that** the catalyst to acid ratio is in the range between 1: 3 and 1:50 inclusive.

14. A construction as claimed in any of Claims 1 to 13, that further comprises one or more additives selected from a group comprising surfactants, corrosion inhibitors, pH buffers, sequestrants, stabilizers, dyes, fragrances, odour masking agents, and mixtures thereof.

## Patentansprüche

1. Aufbau, der ein Substrat aufweist, das als Laminat aufgebaut ist und eine aktivierbare antimikrobielle Zusammensetzung enthält, die einen Peroxid-Donor und eine Säure oder eine Säure erzeugende Substanz aufweist, wobei der Peroxid-Donor bis zur Aktivierung durch Benetzen von dem anderen Bestandteil oder den anderen Bestandteilen der Zusammensetzung getrennt ist,
**dadurch gekennzeichnet, dass**
die Schichten des Laminats durch ein verbindendes Medium miteinander verbunden sind, das als Pulver, Netz oder dünne Lage aufgebracht ist; und
der Peroxid-Donor von dem anderen Bestandteil oder den anderen Bestandteilen der Zusammensetzung getrennt ist, indem er entweder zwischen anderen Schichten des Laminats als der andere Bestandteil oder die anderen Bestandteile der Zusammensetzung eingeführt ist oder in eine andere Zone oder einen anderen Bereich des Substrats als der andere Bestandteil oder die anderen Bestandteile der Zusammensetzung in unterschiedlichen Teilen eines Streumusters aufgebracht ist.

2. Aufbau nach Anspruch 1,
**dadurch gekennzeichnet, dass** das Substrat ein ungewebtes Material aufweist, das aus zumindest einer der folgenden Fasern hergestellt ist: Cellulosefasern, Polyesterfasern, Polyamidfasern, Polyethylenfasern und Polypropylenfasern.

3. Aufbau nach Anspruch 1 oder Anspruch 2,
**dadurch gekennzeichnet, dass** das Substrat mit einem gegenüber Sauerstoff empfindlichen Farbstoff imprägniert ist, der eine Anzeige der Aktivität der antimikrobiellen Zusammensetzung bewirkt.

4. Aufbau nach einem der Ansprüche 1 bis 3,
**dadurch gekennzeichnet, dass** die Säure eine Carbonsäure umfasst.

5. Aufbau nach einem der Ansprüche 1 bis 4,
**dadurch gekennzeichnet, dass** die Säure zumindest eine zweizähnige Säure, Oxalsäure, Fumarsäure, Ascorbinsäure, Succinsäure, Glutarsäure und irgendein Gemisch der vorstehend genannten Säuren umfasst.

6. Aufbau nach einem der Ansprüche 1 bis 5,
**dadurch gekennzeichnet, dass** die Säure ein Gemisch von einer Säure und einem Salz umfasst.

7. Aufbau nach einem der Ansprüche 1 bis 6,
**dadurch gekennzeichnet, dass** die Säure erzeugende Substanz einen Bleichaktivator umfasst.

8. Aufbau nach Anspruch 7,
**dadurch gekennzeichnet, dass** der Bleichaktivator Tetraacetylethylendiamin aufweist.

9. Aufbau nach einem der Ansprüche 1 bis 8,
**dadurch gekennzeichnet, dass** der Peroxid-Donor zumindest eine Verbindung aus Natriumperborat, wie Mono- oder Tetrahydrat, Natriumpercarbonat und Natriumpersulfat umfasst.

10. Aufbau nach einem der Ansprüche 1 bis 9,
**dadurch gekennzeichnet, dass** die antimikrobielle Zusammensetzung ferner einen organometallisches Mangan enthaltenden Katalysator umfasst.

11. Aufbau nach Anspruch 10,
**dadurch gekennzeichnet, dass** der organometallisches Mangan enthaltende Katalysator einen Mangan-trimetyhltriazacyclononan-Komplex umfasst.

12. Aufbau nach Anspruch 10 oder Anspruch 11,
**dadurch gekennzeichnet, dass** das Verhältnis zwischen Katalysator und Peroxid-Donor im Bereich von 1:100 bis einschließlich 1:3000 liegt.

13. Aufbau nach einem der Ansprüche 10 bis 12,
**dadurch gekennzeichnet, dass** das Verhältnis zwischen Katalysator und Säure im Bereich von 1:3 bis einschließlich 1:50 liegt.

14. Aufbau nach einem der Ansprüche 1 bis 13,
der ferner einen oder mehrere Zusätze umfasst, die aus der Gruppe ausgewählt sind, die oberflächenaktive Mittel, Korrosionsinhibitoren, pH-Puffer, Maskierungsmittel, Stabilisatoren, Farbstoffe, Duftstoffe, geruchsabdeckende Mittel und Gemische davon umfasst.

## Revendications

1. Construction comprenant un substrat construit sous forme d'un stratifié et incorporant une composition antimicrobienne activable qui inclut un donneur de peroxygène et un acide ou une substance produisant un acide, le donneur de peroxygène étant séparé de l'autre composant ou des autres composants de la composition jusqu'à l'activation par mouillage;
**caractérisée en ce que**
les couches du stratifié sont liées entre elles par un milieu liant qui est appliqué sous forme d'une poudre, d'un filet ou d'une feuille ; et **en ce que** le donneur de peroxygène est séparé de l'autre composant ou des autres composants de la composition par incorporation dans le substrat entre des couches du stratifié différentes de l'autre composant ou des autres composants de la composition ou par application dans une zone ou aire du substrat différente de l'autre composant ou des autres composants de la composition dans des parties d'un motif de dispersion différentes.

2. Construction selon la revendication 1, **caractérisée en ce que** le substrat comprend un matériau non tissé produit à partir d'au moins l'un de fibres cellulosiques, fibres de polyester, fibres de polyamide, fibres de polyéthylène et fibres de polypropylène.

3. Construction selon la revendication 1 ou la revendication 2, **caractérisée en ce que** le substrat est imprégné d'un colorant sensible à l'oxygène qui agit pour indiquer l'activité de la composition antimicrobienne.

4. Construction selon l'une quelconque des revendications 1 à 3, **caractérisée en ce que** l'acide comprend un acide carboxylique.

5. Construction selon l'une quelconque des revendications 1 à 4, **caractérisée en ce que** l'acide comprend au moins l'un d'un acide bidenté, l'acide oxalique, l'acide fumarique, l'acide ascorbique, l'acide succinique, l'acide glutarique et un mélange quelconque des acides mentionnés précédemment.

6. Construction selon l'une quelconque des revendications 1 à 5, **caractérisée en ce que** l'acide comprend un mélange d'un acide et d'un sel.

7. Construction selon l'une quelconque des revendications 1 à 6, **caractérisée en ce que** la substance produisant un acide comprend un activateur de blanchiment.

8. Construction selon la revendication 7, **caractérisée en ce que** l'activateur de blanchiment comprend de la tétraacétyléthylènediamine.

9. Construction selon l'une quelconque des revendications 1 à 8, **caractérisée en ce que** le donneur de peroxygène comprend au moins l'un de perborate de sodium sous forme de mono ou tétrahydrate, percarbonate de sodium et persulfate de sodium.

10. Construction selon l'une quelconque des revendications 1 à 9, **caractérisée en ce que** la composition antimicrobienne comprend en outre un catalyseur contenant du manganèse organométallique.

11. Construction selon la revendication 10, **caractérisée en ce que** le catalyseur contenant du manganèse organométallique comprend un complexe manganèse-triméthyltriazacyclononane.

12. Construction selon la revendication 10 ou la revendication 11, **caractérisée en ce que** le rapport du catalyseur au donneur de peroxygène est dans la plage entre 1:100 et 1:3000 inclus.

13. Construction selon l'une quelconque des revendications 10 à 12, **caractérisée en ce que** le rapport du catalyseur à l'acide est dans la plage entre 1:3 et 1:50 inclus.

14. Construction selon l'une quelconque des revendications 1 à 13 qui comprend en outre un ou plusieurs additifs choisis dans un groupe comprenant les tensioactifs, les inhibiteurs de corrosion, les tampons de pH, les séquestrants, les stabilisants, les colorants, les parfums, les agents masquant les odeurs et leurs mélanges.
